(19) Europäisches Patentamt
European Patent Office
Office européen des brevets

(11) **EP 4 488 640 A1**

(12) **EUROPÄISCHE PATENTANMELDUNG**

(43) Veröffentlichungstag:
**08.01.2025 Patentblatt 2025/02**

(51) Internationale Patentklassifikation (IPC):
**G01K 1/022** (2021.01)     **G01K 7/42** (2006.01)

(21) Anmeldenummer: **24182903.5**

(52) Gemeinsame Patentklassifikation (CPC):
**G01K 7/427; G01K 1/022;** G01K 2207/04

(22) Anmeldetag: **18.06.2024**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **06.07.2023 DE 102023117855**

(71) Anmelder: **Testo SE & Co. KGaA**
**79822 Titisee-Neustadt (DE)**

(72) Erfinder:
• **Schmitt, David**
  **79110 Freiburg (DE)**
• **Evers-Senne, Jan-Friso**
  **79822 Titisee-Neustadt (DE)**

(74) Vertreter: **Mertzlufft-Paufler, Cornelius et al**
**Maucher Jenkins**
**Patent- und Rechtsanwälte**
**Urachstraße 23**
**79102 Freiburg im Breisgau (DE)**

(54) **VERFAHREN ZUR BESTIMMUNG EINER PRODUKTTEMPERATUR**

(57) Verfahren zur Bestimmung einer Temperatur eines Produkts innerhalb einer festgelegten Umgebung, dadurch gekennzeichnet, dass die Umgebungstemperatur an wenigsten einer Position gemessen wird, und dass aus der Umgebungstemperatur unter Berücksichtigung eines Produktkoeffizienten c eine Produkttemperatur ermittelt wird, wobei der Produktkoeffizient c zuvor in einem zweistufigen Verfahren ermittelt wurde, wobei in einem ersten Schritt durch eine künstliche Intelligenz, KI, ein Näherungswert für den Produktkoeffizienten c ermittelt wird, wobei in einem zweiten Schritt der Produktkoeffizient c ausgehend von dem Näherungswert und wenigstens einer Kontrollmessung bestimmt wird. (Fig. 5)

Fig. 3

**Beschreibung**

Die Erfindung beschreibt ein Verfahren zur Bestimmung einer Temperatur eines Produkts innerhalb einer festgelegten Umgebung.

Die Temperatur von Lebensmitteln spielt eine zentrale Rolle in der Aufrechterhaltung von Qualitätsstandards und in der Einhaltung der Lebensmittelsicherheit. Daher muss diese Temperatur aufgezeichnet werden. Produkte befinden sich in der Regel in Kühl-, Tiefkühl- oder Warmhaltegeräten, welche dafür sorgen, dass sich die Temperatur des Produktes im gewünschten Bereich befindet. Produkttemperaturen sind vor allem im Handel, im Transportwesen und in der Gastronomie daher wichtige Überwachungsgrößen.

Produkte und Waren werden dabei in Kühlräumen oder Kühlgeräten gelagert. Hierbei ist jedoch zu beachten, dass darin keine homogene Temperatur, sondern immer eine Temperaturverteilung vorliegt. Dies ist zumeist konstruktions- oder bauartbedingt.

Unabhängig davon besitzen aber verschiedene Produkte auch weitere physikalische Eigenschaften, die eine Produkttemperatur beeinflussen. Beispielsweise behält ein tiefgefrorenes Produkt auch bei Raumtemperatur eine Zeit lang seine Temperatur. Dies gilt jedoch umgekehrt genauso, das bedeutet, dass ein warmes Produkt in kalten Umgebungen noch eine Zeit warm bleibt. Daher kann eine Temperaturmessung in einem Raum immer nur eine Aussage über die Umgebung liefern, die nicht unbedingt für die darin gelagerten Produkte gilt.

Aktuell wird der Zustand der Produkte anhand der Lufttemperatur bestimmt, welche durch einen Datenlogger an einer bestimmten Stelle im Gerät aufgezeichnet wird. Anhand dieser Lufttemperatur werden Alarmierungen ausgelöst.

Zusätzlich zur Messung der Lufttemperatur kommen stichprobenhaft manuelle Messungen der Produkte beispielsweise mittels Einstechthermometer zum Einsatz. Diese Produkte sind nach der Messung jedoch zu entsorgen.

Aufgabe der Erfindung ist es nun, ein Verfahren zur Bestimmung einer Produkttemperatur zu schaffen, das im Wesentlichen unabhängig von der Umgebung ist.

Diese Aufgabe wird durch ein Verfahren nach Anspruch 1 gelöst. Das erfindungsgemäße Verfahren ist dadurch gekennzeichnet, dass die Umgebungstemperatur an wenigsten einer Position gemessen wird, und dass aus der Umgebungstemperatur unter Berücksichtigung eines Produktkoeffizienten c eine Produkttemperatur ermittelt wird, wobei der Produktkoeffizient c zuvor in einem zweistufigen Verfahren ermittelt wurde, wobei in einem ersten Schritt durch eine künstliche Intelligenz, KI, ein Näherungswert für den Produktkoeffizienten c ermittelt wird, wobei in einem zweiten Schritt der Produktkoeffizient c ausgehend von dem Näherungswert und wenigstens einer Kontrollmessung bestimmt wird.

Der Vorteil besteht nun darin, dass eine Umgebungstemperatur, die beispielsweise in einem Kühlraum oder -gerät gemessen wird, mit Hilfe des Produktkoeffizienten in eine Produkttemperatur umgerechnet wird. Dadurch werden viele Eigenschaften des Produkts und der Umgebung berücksichtigt, so dass die Produkttemperatur besser abgebildet wird.

In abgeschlossenen Systemen kann laut dem zweiten Hauptsatz der Thermodynamik die Entropie nur zunehmen oder gleichbleiben. Systeme streben dabei immer den Zustand maximaler Entropie an. Wird also ein Körper mit einer bestimmten Temperatur T1 in ein geschlossenes System mit einer Temperatur T2 gebracht, so wird ein Temperaturangleich stattfinden, sodass nach einer gewissen Zeit gilt T1 = T2. Das System hat somit den Zustand maximaler Entropie erreicht. Dieser Angleichzustand kann als e-Funktion approximiert werden. Physikalisch wird das Angleichverhalten unter anderem durch folgende Faktoren beeinflusst:

- Wärmekapazität und Wärmeübergangskoeffizient des Produktes
- Wärmeleitwiderstand der Verpackung
- Temperaturdifferenz zwischen Produkt und Umgebung
- Konvektion in Umgebung
- Wärmekapazität der Umgebung

Der weitere Vorteil der Erfindung besteht nun darin, dass der Produktkoeffizient diese physikalischen Eigenschaften abbildet, ohne komplizierte und aufwändige Berechnungen.

Zudem wird der Produktkoeffizient durch eine künstliche Intelligenz ermittelt. Auf diese Weise können sehr viele Eingangsparameter berücksichtigt werden, wobei die Eingangsparameter aber nicht diese physikalischen Größen sind, sondern Angaben und empirische Daten zum Produkt.

Durch die Verwendung der KI kann also auf einfache Weise der Produktkoeffizient bestimmt werden, ohne die physikalischen Zusammenhänge direkt zu kennen und zu berücksichtigen. Auf diese Weise ist es dann beispielsweise ausreichend als Eingabeparameter anzugeben, dass etwa Tiefkühlerbsen verwendet werden, und es ist nicht notwendig, beispielsweise die Wärmekapazität von Tiefkühlerbsen zu kennen.

Auf diese Weise können auch Produkte verwendet werden, ohne dass für jedes einzelne Produkt eine Vielzahl an Vorbestimmungen, Messungen und/oder Tests durchgeführt werden müssen.

Die künstliche Intelligenz kann beispielsweise ein künstliches neuronales Netz umfassen.

Die Berechnung der Temperatur ist durch den einfachen Produktkoeffizient zudem sehr einfach und erfordert wenig Rechenleistung. Sie kann daher auch in einem mobilen Messgerät oder beispielsweise auf einem Smartphone oder einem ähnlichen Gerät erfolgen.

Darüber hinaus können stichprobenhafte Messungen reduziert werden oder ganz entfallen, so dass weniger Lebensmittel entsorgt werden müssen.

In einer Ausführung der Erfindung wird bei der Ermittlung der Produkttemperatur zusätzlich ein Repositionierungskoeffizient d berücksichtigt. Dieser Repositionierungskoeffizient berücksichtigt die Lage oder Position des Produkts innerhalb der Umgebung. Dadurch kann berücksichtigt werden, dass die Temperatur innerhalb der Umgebung nicht homogen ist. Der Vorteil besteht darin, dass durch eine Temperaturmessung an einer Position die Temperaturverteilung innerhalb der Umgebung berücksichtigt wird und eine korrekte Produkttemperatur bestimmbar ist. Hierzu wird in der Regel lediglich ein Abstand zum Ort der Temperaturmessung benötigt.

In einer Ausführung wird der Repositionierungskoeffizient d durch die oder eine KI ermittelt.

In einer Ausführung erhält die KI als Eingabeparameter wenigstens Angaben zu: Produkt, Anwendung, Gerät, Verpackung, Gerätevolumen, Nutzungsverhalten, Median, Standardabweichung und Messtakt.

Produkt beschreibt die Art des Produkts (bspw. Hackfleisch, Fischstäbchen, Erbsen usw.)

Anwendung oder Applikation ist beispielsweise Kühlen, Gefrieren, Warmhalten (Hotholding) usw.

Gerät beschreibt die Art des Geräts, in dem das Produkt lagert (Bsp. Kühlhaus, Gefriertruhe, usw.)

Verpackung beschreibt die Art der Verpackung (bspw. Karton, Plastikkorb, Plastiktüte, Styropor usw.)

Gerätevolumen beschreibt das Volumen des Gerätes oder des nutzbaren Raumes, etwa in Kubikmeter.

Nutzungsverhalten beschreibt die Art der Nutzung, beispielsweise Dauernutzung oder Nicht-Dauernutzung.

Median beschreibt den Median der oder aller aufgezeichneten Temperaturen zu der Kombination an Eingabeparametern.

Standardabweichung beschreibt die Standardabweichung der aufgezeichneten Temperaturen.

Messtakt beschreibt das Intervall oder in welcher Frequenz neue Messwerte aufgenommen werden.

Die KI kann weitere Eingabeparameter erhalten, sofern dies durch die Anwendung notwendig ist, weshalb die oben genannte Liste nicht abgeschlossen ist. Als Ausgabe der KI erfolgt ein Produktkoeffizient und eventuell zusätzlich ein Repositionierungskoeffizient. Unter Umständen können für die beiden Koeffizienten unterschiedliche KIs verwendet werden.

Die KI, besonders ein künstliches neuronales Netz, muss zuvor durch Trainingsdaten trainiert werden.

In einer Ausführung werden zum Training der KI zu bestimmten Eingabeparametern ein zugehöriger Produktkoeffizient und Repositionierungskoeffizient durch Messungen und/oder Versuche ermittelt und mit den zugrundeliegenden Eingabeparametern der KI als Trainingsdaten zugeführt.

Als Trainingsdaten werden zweckmäßigerweise die Eingabeparameter verwendet, die später Verwendung finden. Die Trainingsdaten können dabei auf realen Messwerten oder anderen realen oder empirischen Werten beruhen. So könnte beispielsweise für eine Gefriertruhe durch mehrere Temperaturmessungen ein Temperaturverlauf innerhalb des Geräts bestimmt werden. Ebenso könnten für verschiedene Produkte zeitliche Verläufe der Produkttemperatur und andere Parameter ermittelt werden. Diese empirischen Werte resultieren in einem oder beiden Koeffizienten, der dann als Trainingswert zusammen mit den jeweiligen Eingabeparametern der KI übergeben wird.

Durch den Einsatz der KI kann jedoch die Anzahl der zu ermittelnden Werte stark verringert werden. Somit ist es beispielsweise möglich, auch für Kombinationen an Eingabewerten die Koeffizienten zu ermitteln, für die keine direkten Messwerte vorliegen.

In einer Ausführung wird die Produkttemperatur gemäß der Formel:

$$T_n = \frac{\left(T_m + \left(T_{n-1} - d\right) * c\right)}{(c+1) + d}$$

berechnet. Wobei $T_m$ die gemessene Umgebungstemperatur ist, $T_{n-1}$ ist die im vorherigen Messtakt ermittelte Produkttemperatur, $c$ ist der Produktkoeffizient und $d$ der Repositionierungskoeffizient. $T_n$ ist dann die in diesem Messtakt ermittelte Produkttemperatur.

In einer Ausführung werden in dem zweiten Schritt bei der Kontrollmessung zwei Messreihen aufgezeichnet, wobei die erste Messreihe eine Umgebungstemperatur umfasst und die zweite Messreihe die Produkttemperatur umfasst und wobei der Produktkoeffizient und eventuell der Repositionierungskoeffizient so angepasst werden, dass die ermittelte Temperatur der zweiten Messreihe angenähert wird. Auf diese Weise ist es für das Training der KI möglich, den Produktkoeffizient und eventuell den Repositionierungskoeffizient genauer zu bestimmen.

Die Erfindung wird nachfolgend anhand von

Ausführungsbeispielen mit Bezug auf die beiliegenden Zeichnungen näher erläutert.

Es zeigt:

Fig. 1      eine schematische Schnittansicht durch eine Tiefkühltruhe,

Fig. 2      verschiedene Temperaturverläufe an verschiedenen Positionen innerhalb der Tiefkühltruhe der Fig. 1,

Fig. 3      verschiedene Temperaturverläufe für ein Anwendungsbeispiel von Hackfleisch in einem Kühlgerät,

Fig. 4      eine schematische Blockdarstellung einer Messanordnung,

Fig. 5    ein Ablaufschema eines erfindungsgemäßen Verfahrens zur Bestimmung einer Produkttemperatur und

Fig. 6    ein Ablaufschema eines Verfahrens zum Bestimmen des Produktkoeffizienten und des Repositionierungskoeffizienten.

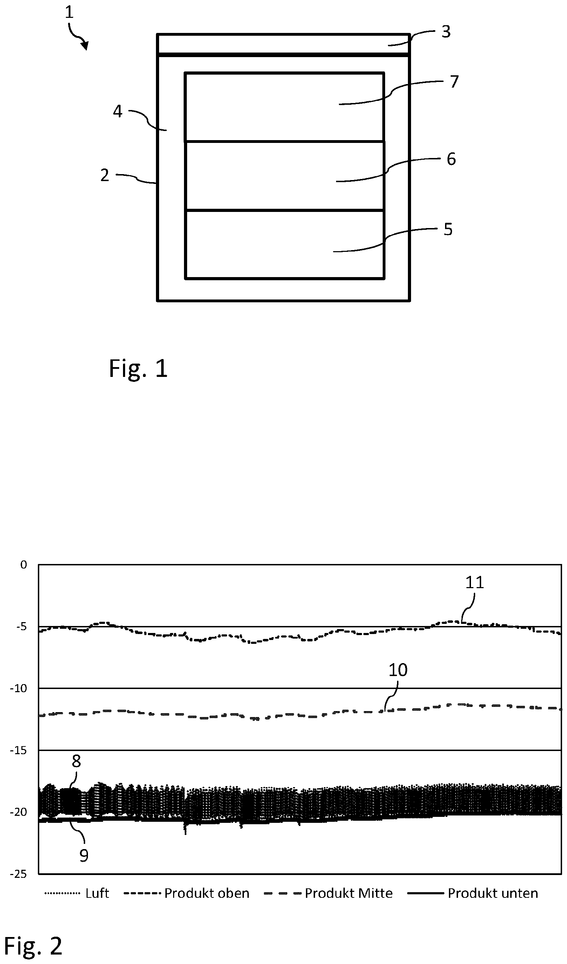

Die Fig. 1 zeigt schematisch einen Schnitt durch eine Gefriertruhe 1. Die Gefriertruhe 1 besitzt einen Truhenkörper 2, der im Beispiel nach oben offen ist und durch einen beweglichen Deckel 3 verschlossen ist. Im Truhenkörper 2 ist ein Gefrierraum 4, in dem Gefriergut eingelegt werden kann.

Konstruktionsbedingt besteht im Gefrierraum 4 ein Temperaturverlauf, der hier angenähert durch drei Temperaturzonen angedeutet ist. In der unteren Temperaturzone 5 liegt die kälteste Temperatur vor. In der mittleren Temperaturzone 6 ist es wärmer und in der oberen Temperaturzone 7 am wärmsten.

Die Fig. 2 zeigt beispielhaft den zeitlichen Temperaturverlauf der Lufttemperatur 8 innerhalb einer Tiefkühltruhe 1 gemäß der Fig. 1. Hierbei ist zu sehen, dass die Lufttemperatur 8 über die Zeit um etwa 4°C schwankt.

Die untere Produkttemperatur 9 zeigt den zeitlichen Temperaturverlauf eines Produkts innerhalb der unteren Temperaturzone 5 der Tiefkühltruhe 1. Diese untere Produkttemperatur 9 liegt im Wesentlichen unterhalb der Lufttemperatur 8 und unterliegt wesentlich kleineren Schwankungen.

Die mittlere Produkttemperatur 10 zeigt den zeitlichen Temperaturverlauf eines Produkts innerhalb der mittleren Temperaturzone 6 der Tiefkühltruhe 1. Die mittlere Produkttemperatur 10 liegt im Wesentlichen 7,5°C über der unteren Produkttemperatur 9.

Die obere Produkttemperatur 11 zeigt den zeitlichen Temperaturverlauf eines Produkts innerhalb der oberen Temperaturzone 7 der Tiefkühltruhe 1. Die obere Produkttemperatur 11 liegt im Wesentlichen 15°C über der unteren Produkttemperatur 9.

Dadurch wird es deutlich, dass eine Messung der Lufttemperatur an einer Stelle innerhalb des Gefrierraumes 4 nicht ausreichend ist, um eine Produkttemperatur zu bestimmen.

Dieser Temperaturunterschied zwischen den Temperaturzonen kann erfindungsgemäß durch den Repositionierungskoeffizient berücksichtigt werden.

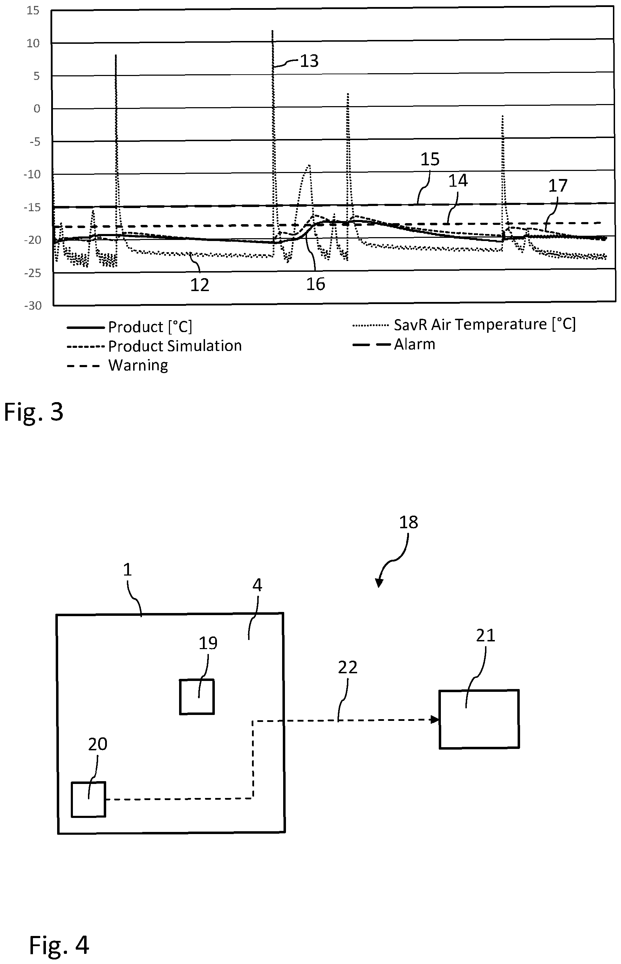

Die Fig. 3 zeigt den zeitlichen Temperaturverlauf an einem weiteren Beispiel, hier einer Hackfleischprobe innerhalb einer Gefriertruhe 1, etwa gemäß der Fig. 1.

Die Lufttemperatur 12 zeigt hier mehrere Spitzen 13, die beispielsweise durch Öffnen des Deckels 2 entstehen. Hierbei wird eine Warngrenztemperatur 14 und zum Teil auch die Alarmgrenztemperatur 15 überschritten, wodurch ein Alarm ausgelöst würde.

Die Produkttemperatur 16 folgt den Spitzen 13 jedoch nur verzögert und nicht so stark, dass die Alarmgrenztemperatur 15 überschritten wird. Im mittleren Bereich, in denen mehrere Spitzen 13 beieinander liegen, ist jedoch die Warngrenztemperatur 14 überschritten.

Die Lufttemperatur 12 und die Produkttemperatur 16 sind Messwerte. Demgegenüber ist die simulierte Produkttemperatur 17 durch das erfindungsgemäße Verfahren berechnet. Hier ist deutlich zu sehen, dass die simulierte Produkttemperatur 17 den Spitzen 13 deutlicher folgt als die tatsächliche Produkttemperatur, jedoch immer unterhalb der Alarmgrenztemperatur 15 bleibt, wie auch die Produkttemperatur 16. Insgesamt ist die Abweichung zwischen Produkttemperatur 16 und simulierter Produkttemperatur 17 sehr gering. Das erfindungsgemäße Verfahren ist daher sehr gut geeignet, ausgehend von der gemessenen Lufttemperatur eine Produkttemperatur sehr genau zu bestimmen.

Die Fig. 4 zeigt ein Blockdiagramm einer Messanordnung 18 mit einer Gefriertruhe 1 mit einem Gefrierraum 4. In dem Gefrierraum 4 ist ein Produkt 19 und ein Datenlogger 20 angeordnet. Der Datenlogger 20 ist zur Messung einer Lufttemperatur innerhalb des Gefrierraums 4 ausgebildet. Die Messung wird mit einem vorgegebenen Messtakt in gleichmäßigen Intervallen wiederholt. Beispielsweise kann eine Messung pro Minute erfolgen. Das Produkt 19 liegt in einem Abstand zum Datenlogger 20. Der Datenlogger 20 kann dazu ausgebildet sein, die einzelnen Messungen über einen bestimmten Zeitraum zu speichern. Am Ende des Zeitraums kann der Datenlogger 20 mit einer Auswerteinheit 21 verbunden werden, um die Messwerte zu übertragen. Alternativ oder zusätzlich kann der Datenlogger 20 auch permanent oder zeitweilig mit einer Auswerteinheit 21 verbunden werden, etwa über eine drahtlose Funkverbindung, um Messwerte kontinuierlich oder in engeren Intervallen an die Auswerteinheit 21 zu übertragen. Die Auswerteinheit 21 kann beispielsweise mobil, etwa ein Smartphone oder stationär sein.

Im Beispiel ist außerhalb der Gefriertruhe 1 eine Auswerteinheit 21 angeordnet, die mit dem Datenlogger 20 über eine Funkverbindung 22 verbunden ist, um Messdaten zu übertragen.

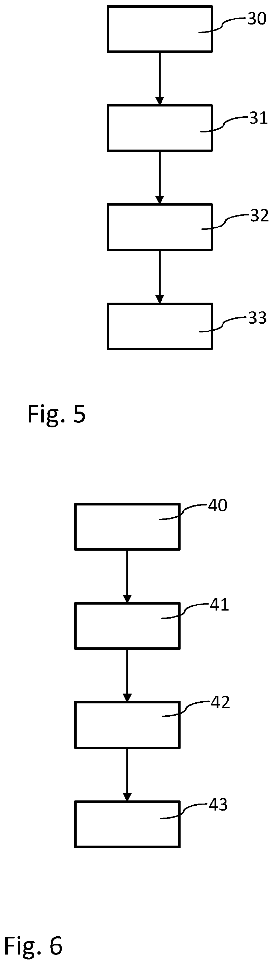

Das erfindungsgemäße Verfahren kann in der Praxis beispielsweise auf folgende Weise angewendet werden. Die Fig. 5 zeigt schematisch ein Ablaufdiagramm des Verfahrens. Ein Temperaturmessgerät, etwa ein Datenlogger 20, wird in einem ersten Schritt 30 in einem Kühlraum oder einer Gefriertruhe 1 angeordnet. In Schritt 31 misst der Datenlogger 20 in einem bestimmten Messtakt oder Intervall die Umgebungstemperatur innerhalb des Gefrierraumes 4, etwa die Lufttemperatur. Die Messwerte werden in einem weiteren Schritt 32 drahtlos per Funk an die Auswerteinheit 21 übertragen.

In einem nächsten Schritt 33 wird in der Auswerteinheit 21 aus der gemessenen Lufttemperatur eine Produkttemperatur nach dem erfindungsgemäßen Verfahren bestimmt.

Für jeden Messwert des Datenloggers wird in dem Schritt 33 für jedes Produkt die Produkttemperatur bestimmt, beispielsweise mit der oben genannten For-

$$T_n = \frac{T_m + (T_{n-1} - d) * c}{c + 1} + d$$

mel Dabei spielt der Produktkoeffizient c eine entscheidende Rolle. Dieser muss zur Berechnung der Produkttemperatur bekannt sein. Erfindungsgemäß wurde er zuvor für jedes in der Kühltruhe gelagerte Produkt durch eine entsprechend trainierte KI bestimmt. Als Eingabeparameter dienen die oben genannten Produkt- und Geräteparameter.

Dies kann auch einmalig im Vorfeld geschehen, wobei die Produktkoeffizienten c(Produkt) jedes Produkts etwa in einer Tabelle innerhalb der Auswerteeinheit 21 abgelegt werden können.

Dadurch, dass jeder Messwert vom unmittelbar vorhergehenden ermittelten Temperaturwert abhängig ist, ergibt sich ein zeitlicher Verlauf, der zudem extreme Spitzen vermeidet. Der Verlauf der einzelnen Messwerte wird in einem Schritt 34 gespeichert. Der Repositionierungskoeffizient d wirkt dabei direkt additiv. Im Beispiel der Fig. 1 wäre dann der Repositionierungskoeffizient d für Produkte in der unteren Temperaturzone 5 d(unten) =0, in der mittleren Temperaturzone 6 d(mitte)=7,5°C und in der oberen Temperaturzone 7 d(oben)=15°C.

Je nach Anwendung kann eine Umgebung auch in mehrere Temperaturzonen eingeteilt werden. Der

Repositionierungskoeffizient d kann auch anhand einer Formel aus einem Abstand bestimmt werden, so dass keine diskreten Temperaturzonen notwendig sind. Dies kann beispielsweise bei großen Umgebungen, etwa Kühllager oder Lageräumen sinnvoll sein.

Im Beispiel der Fig. 4 kann der Repositionierungskoeffizient d aus dem Abstand zwischen dem Datenlogger 20 und dem Produkt 19 bestimmt werden.

Der Produktkoeffizient c wird gemäß der Erfindung in einem zweistufigen Verfahren bestimmt.

Die Fig. 5 zeigt ein Ablaufschema eines Verfahrens zum Bestimmen des Produktkoeffizienten.

In einem ersten Schritt 40 wird durch eine künstliche Intelligenz, KI, ein Näherungswert für den Produktkoeffizienten c ermittelt.

In einem zweiten Schritt 41 werden bei einer Kontrollmessung zwei Messreihen aufgezeichnet, wobei die erste Messreihe eine Umgebungstemperatur umfasst und die zweite Messreihe die Produkttemperatur umfasst.

In einem weiteren Schritt 42 wird unter Verwendung des Näherungswertes aus dem ersten Schritt aus der Umgebungstemperatur eine Produkttemperatur ermittelt.

In einem weiteren Schritt 43 wird der Produktkoeffizient so angepasst, dass die ermittelte Produkttemperatur der zweiten Messreihe, also der gemessenen Produkttemperatur, angenähert wird.

Bei der Kontrollmessung kann auch eine Position des Produkts in Bezug auf die Umgebungstemperaturmessung berücksichtigt werden, so dass auch ein Repositionierunskoeffizient ermittelt werden kann.

Für den ersten Schritt ist eine KI, etwa ein künstliches neuronales Netz, notwendig, das zuvor mit entsprechenden Daten trainiert wurde. Die Eingabeparameter sind oben beschrieben. Die dazu passenden Koeffizienten, also Produkt- und Repositionierungskoeffizient, müssen für das Training durch Versuche ermittelt werden. Der Vorteil bei der Verwendung einer KI liegt nun darin, dass nicht für jegliche Kombination aus Eingabeparametern ein Versuch durchgeführt werden muss. Denn die KI kann diese fehlenden Versuche ausgleichen.

## Bezugszeichenliste

| 1 | Gefriertruhe |
|---|---|
| 2 | Truhenkörper |
| 3 | Deckel |
| 4 | Gefrierraum |
| 5 | Untere Temperaturzone |
| 6 | Mittlere Temperaturzone |
| 7 | Obere Temperaturzone |
| 8 | Lufttemperatur |
| 9 | Untere Produkttemperatur |
| 10 | Mittlere Produkttemperatur |
| 11 | Obere Produkttemperatur |
| 12 | Lufttemperatur |
| 13 | Spitze |
| 14 | Warngrenztemperatur |
| 15 | Alarmgrenztemperatur |
| 16 | Produkttemperatur |
| 17 | Simulierte Produkttemperatur |
| 18 | Messanordnung |
| 19 | Produkt |
| 20 | Datenlogger |
| 21 | Auswerteeinheit |
| 22 | Funkverbindung |
| 30 - 33 | Verfahrensschritte |
| 40 - 43 | Verfahrensschritte |

## Patentansprüche

1. Verfahren zur Bestimmung einer Produkttemperatur innerhalb einer festgelegten Umgebung, **dadurch gekennzeichnet,**

   **dass** die Umgebungstemperatur (12) an wenigsten einer Position gemessen wird (31), und
   **dass** aus der Umgebungstemperatur unter Berücksichtigung eines Produktkoeffizienten c eine Produkttemperatur (17) ermittelt wird (33), wobei der Produktkoeffizient c zuvor in einem zweistufigen Verfahren ermittelt wurde, wobei in einem ersten Schritt (40) durch eine künstliche Intelligenz, KI, ein Näherungswert für den Produktkoeffizienten c ermittelt wird, wobei in einem zweiten Schritt der Produktkoeffizient c ausgehend von dem Näherungswert und wenigstens einer Kontrollmessung bestimmt wird.

2. Verfahren nach Anspruch 1, **dadurch gekennzeichnet, dass** bei der Ermittlung der Produkttemperatur zusätzlich ein Repositionierungskoeffizient d berücksichtigt wird.

3. Verfahren nach Anspruch 2, **dadurch gekennzeichnet, dass** der Repositionierungskoeffizient d durch die oder eine KI ermittelt wird.

4. Verfahren nach einem der vorhergehenden Ansprüche,
   **dadurch gekennzeichnet, dass** die KI als Eingabeparameter wenigstens Angaben zu: Produkt, Anwendung, Gerät, Verpackung, Gerätevolumen, Nutzungsverhalten, Median, Standardabweichung und Messtakt erhält und als Ausgabe ein Produktkoeffizient und eventuell ein Repositionierungskoeffizient erfolgt.

5. Verfahren nach einem der vorhergehenden Ansprüche,
   **dadurch gekennzeichnet, dass** zum Training der KI zu bestimmten Eingabeparametern ein zugehöriger Produktkoeffizient und Repositionierungskoeffizient durch Messungen ermittelt und mit den zugrundeliegenden Eingabeparametern der KI als Trainingsdaten zugeführt werden.

6. Verfahren nach einem der vorhergehenden Ansprüche,
   **dadurch gekennzeichnet, dass** die Produkttemperatur gemäß der Formel:

$$T_n = \frac{T_m + (T_{n-1} - d) * c}{c + 1} + d$$

berechnet wird.

7. Verfahren nach einem der vorhergehenden Ansprüche,
   **dadurch gekennzeichnet, dass** in dem zweiten Schritt (41) bei der Kontrollmessung zwei Messreihen aufgezeichnet werden, wobei die erste Messreihe eine Umgebungstemperatur umfasst und die zweite Messreihe die Produkttemperatur umfasst und wobei in einem weiteren Schritt (43) der Produktkoeffizient und eventuell der Repositionierungskoeffizient so angepasst werden, dass die ermittelte Temperatur der zweiten Messreihe angenähert wird.

Fig. 1

Fig. 2

Fig. 3

Fig. 4

```
┌──────────┐
│          │────30
└────┬─────┘
     │
     ▼
┌──────────┐
│          │────31
└────┬─────┘
     │
     ▼
┌──────────┐
│          │────32
└────┬─────┘
     │
     ▼
┌──────────┐
│          │────33
└──────────┘
```

Fig. 5

```
┌──────────┐
│          │────40
└────┬─────┘
     │
     ▼
┌──────────┐
│          │────41
└────┬─────┘
     │
     ▼
┌──────────┐
│          │────42
└────┬─────┘
     │
     ▼
┌──────────┐
│          │────43
└──────────┘
```

Fig. 6

**Europäisches Patentamt**
**European Patent Office**
**Office européen des brevets**

## EUROPÄISCHER RECHERCHENBERICHT

Nummer der Anmeldung

EP 24 18 2903

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2022/011045 A1 (HIRSCH SVEN [CH] ET AL) 13. Januar 2022 (2022-01-13) * Zusammenfassung; Abbildungen 1-3 * * Absätze [0019] - [0022], [0040] - [0053] * - - - - - | 1-7 | INV. G01K1/022 G01K7/42 |
| A | US 2022/114528 A1 (MANDAVA PANDURANGA RAO [US] ET AL) 14. April 2022 (2022-04-14) * Zusammenfassung * * Absatz [0023] * - - - - - | 1-7 | |

RECHERCHIERTE SACHGEBIETE (IPC)

G01K

Der vorliegende Recherchenbericht wurde für alle Patentansprüche erstellt

| Recherchenort | Abschlußdatum der Recherche | Prüfer |
|---|---|---|
| Den Haag | 1. November 2024 | de Bakker, Michiel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 18 2903

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-11-2024

| Im Recherchenbericht angeführtes Patentdokument | Datum der Veröffentlichung | Mitglied(er) der Patentfamilie | Datum der Veröffentlichung |
|---|---|---|---|
| US 2022011045 A1 | 13-01-2022 | AU 2021204780 A1<br>EP 3936804 A1<br>US 2022011045 A1 | 27-01-2022<br>12-01-2022<br>13-01-2022 |
| US 2022114528 A1 | 14-04-2022 | KEINE | |

Für nähere Einzelheiten zu diesem Anhang : siehe Amtsblatt des Europäischen Patentamts, Nr.12/82